# EUROPÄISCHE PATENTANMELDUNG

(11) **EP 4 410 930 A1**
(43) Veröffentlichungstag der Anmeldung: **07.08.2024**
(21) Anmeldenummer: 24155180.3
(22) Anmeldetag: 01.02.2024
(51) Int. Cl.: C10J 3/00, C10K 1/06

(54) **VERFAHREN UND VORRICHTUNGEN ZUR ERZEUGUNG EINES WASSERSTOFFHALTIGEN SYNTHESEGASES**

(30) Priorität: 02.02.2023 DE 102023102586
(71) Anmelder: GSE Green Synthetic Energy GmbH, 66996 Fischbach bei Dahn (DE)
(72) Erfinder: Boos, Werner, 67160 Oberhoffen Les Wissembourg (FR)
(74) Vertreter: LBP Lemcke, Brommer & Partner Patentanwälte mbB

(57) **Zusammenfassung**

Verfahren zur Erzeugung von wasserstoffhaltigem Synthesegas (S), umfassend die folgenden Verfahrensschritte:
a) Bereitstellen eines organischen Rohstoffes;
b) Fördern des organischen Rohstoffes durch eine Entgasungsvorrichtung (4) unter Zuführung von Wärme, wodurch der organische Rohstoff zumindest in ein kohlenstoffhaltiges Material (K) und ein Rohgas (R) aufgetrennt wird, wobei das Rohgas (R) zumindest Kohlenstoffmonoxid und Wasserstoff umfasst;
c) Getrenntes Abführen des kohlenstoffhaltigen Materials (K) und des Rohgases (R) aus der Entgasungsvorrichtung (4);
d) Vermischung des Rohgases (R) mit Wasserdampf (D) zu einem Gemisch (M) und Durchführung einer Wassergas-Shiftreaktion, bei der ein in dem Gemisch (M) enthaltener Anteil an Kohlenstoffmonoxid verringert und ein Anteil an Wasserstoff erhöht wird;
e) Abkühlen des Gemischs (M), wobei der in dem Gemisch enthaltene Wasserdampf (D) zumindest teilweise kondensiert und das wasserstoffhaltige Synthesegas (S) gebildet wird.

## Beschreibung

Die vorliegende Erfindung betrifft ein Verfahren zur Erzeugung von wasserstoffhaltigem Synthesegas, eine Entgasungsvorrichtung sowie eine Vergasungsanlage.

Brennbare Gase, beispielsweise Erdgas, können sowohl industriell als auch für private Zwecke der Energieversorgung dienen und werden zumeist aus fossilen Rohstoffen gewonnen. Zur Erhöhung der Nachhaltigkeit in der Energieversorgung besteht allerdings ein zunehmender Bedarf nach synthetisch hergestellten Alternativen, insbesondere wasserstoffhaltigem Synthesegas.

Die Erzeugung eines derartigen wasserstoffhaltigen Synthesegases geht mit verschiedenen Erfordernissen einher, die erfüllt sein müssen, um an wirtschaftlicher Bedeutung zu gewinnen. So ist es beispielsweise gewünscht, dass die einsetzbaren Rohstoffe zur Erzeugung des Synthesegases nicht auf ausgewählte Materialien, etwa Holz, beschränkt sind. Darüber hinaus ist es erforderlich, dass die in dem Synthesegas enthaltenen Gasbestandteile in gezielt einstellbaren Menge vorliegen, damit das Synthesegas die erforderliche Qualität aufweist, um durch dessen Verbrennung eine zuverlässige Energieversorgung sicherstellen zu können. Außerdem muss das Verfahren zur Erzeugung des Synthesegases sowie die dabei verwendeten Vorrichtungen und Anlagen eine gute Umweltverträglichkeit aufweisen, wofür die Erzeugung des Synthesegases insbesondere mit geringen Emissionen einhergehen muss.

Der Erfindung liegt die Aufgabe zugrunde, ein Verfahren sowie eine Vorrichtung und eine Anlage vorzuschlagen, mittels derer es möglich ist, ein wasserstoffhaltiges Synthesegas zu erzeugen und die vorstehend genannten Erfordernisse zu erfüllen.

Die Aufgabe wird gelöst mittels eines Verfahrens gemäß Anspruch 1, einer Entgasungsvorrichtung gemäß Anspruch 13 sowie zwei Vergasungsanlagen gemäß den Ansprüchen 14 und 15. Vorteilhafte Weiterbildungen sind jeweils Gegenstände der abhängigen Unteransprüche.

Erfindungsgemäß umfasst das Verfahren zur Erzeugung von wasserstoffhaltigem Synthesegas die folgenden Verfahrensschritte:
a) Bereitstellen eines organischen Rohstoffes;
b) Fördern des organischen Rohstoffes durch eine Entgasungsvorrichtung unter Zuführung von Wärme, wodurch der organische Rohstoff zumindest in ein Rohgas und ein kohlenstoffhaltiges Material aufgetrennt wird und das Rohgas zumindest Kohlenstoffmonoxid und Wasserstoff umfasst;
c) Getrenntes Abführen des kohlenstoffhaltigen Materials und des Rohgases aus der Entgasungsvorrichtung;
d) Vermischung des Rohgases mit Wasserdampf zu einem Gemisch und Durchführung einer Wassergas-Shiftreaktion, bei der ein in dem Gemisch enthaltener Anteil an Kohlenstoffmonoxid verringert und ein Anteil an Wasserstoff erhöht wird;
e) Abkühlen des Gemischs, wobei der in dem Gemisch enthaltene Wasserdampf zumindest teilweise kondensiert und das wasserstoffhaltige Synthesegas gebildet, insbesondere abgeschieden, wird.

Die Erfindung beruht auf dem grundlegenden Umstand, dass jede organische Materie in ihre molekularen Bestandteile zerlegt werden kann. Insbesondere ist es möglich, aus nahezu jeder organischen Biomasse ein gleichmäßiges wasserstoffreiches brennbares Synthesegas zu erzeugen, indem der organische Rohstoff in das oben genannte Rohgas und das kohlenstoffhaltige Material, welches insbesondere in festem Aggregatzustand vorliegt, aufgetrennt wird.

Bei dem organischen Rohstoff kann es sich um ein grundsätzlich beliebiges Material handeln, welches Kohlenstoff enthält. Vorzugsweise handelt es sich bei dem organischen Rohstoff um einen pflanzlichen Stoff, welcher beispielsweise in der Lebensmittelproduktion oder Lebensmittelverarbeitung als Abfall anfällt, etwa Maisspindeln oder vergleichbare überschüssige Pflanzenbestandteile oder beispielsweise Teigverschnitt. Ebenso kann es sich bei dem organischen Rohstoff um ein industriell hergestelltes Erzeugnis handeln, welches Kohlenstoff enthält, beispielsweise Kunststoff. Sofern es sich bei dem Rohstoff um einen synthetisch hergestellten Kunststoff handelt, haben Untersuchungen der Anmelderin gezeigt, dass bei der Durchführung des hier beschriebenen Verfahrens eine nur geringe Menge an kohlenstoffhaltigem Material erzeugt wird.

Der Rohstoff kann in Gestalt eines zusammenhängenden Stückes oder mehrerer voneinander getrennter Einzelelemente, etwa als Schüttgut, vorliegen und in Verfahrensschritt a) manuell oder automatisiert bereitgestellt werden.

Grundsätzlich ist die Durchführung des erfindungsgemäßen Verfahrens also nicht auf einen bestimmten organischen Rohstoff oder seine Gestalt beschränkt. Vorteilhaft ist allerdings, wenn der organische Rohstoff in Verfahrensschritt a) eine Restfeuchte zwischen 15% und 30% aufweist. Bevorzugt kann vor Verfahrensschritt a) ein Trocknungsschritt durchgeführt werden, um die gewünschte Restfeuchte einzustellen, wobei insbesondere eine in dem Verfahren erzeugte Prozesswärme genutzt wird.

Die Entgasungsvorrichtung dient im Sinne der Erfindung dazu, dem organischen Rohstoff Wärme zuzuführen, damit dieser in das Rohgas und das kohlenstoffhaltige Material aufgetrennt werden kann. Insbesondere enthält das Rohgas infolge der Durchführung des Verfahrensschrittes b) neben dem bereits genannten Kohlenstoffmonoxid (CO) und Wasserstoff (H₂) auch Kohlenstoffdioxid (CO₂) und/oder Methan (CH₄). Bevorzugt erfolgt Verfahrensschritt b) bei einer Temperatur zwischen 800°C und 1200°C.

Vorzugsweise erfolgt die Zuführung von Wärme in der Entgasungsvorrichtung in Verfahrensschritt b) allotherm. Dies bedeutet, dass der Umwandlungsprozess, bei dem das Rohgas und kohlenstoffhaltige Material aus dem organischen Rohstoff gewonnen werden, mittels einer äußeren Zufuhr von Wärme erfolgt, die Wärmezufuhr jedoch keine direkte chemische Änderung des organischen Rohstoffes hervorruft, insbesondere keine Verbrennung. Vielmehr handelt es sich bei dem in Schritt b) ablaufenden Prozess um eine allotherme Pyrolyse, bei der ein organischer Rohstoff durch von außen zugeführte Wärme gespalten wird. Nach Durchführung des Verfahrensschrittes b) liegt das kohlenstoffhaltige Material also vorzugsweise als unverbrannter Körper in Gestalt eines einen festen Kohlenstoffrückstandes vor.

Insbesondere wird die allotherme Verfahrensführung in Verfahrensschritt b) dadurch begünstigt, dass mittels des erzeugten Rohgases in der Entgasungsvorrichtung eine inerte Atmosphäre erzeugt wird. Zu Beginn der Durchführung des Verfahrensschrittes b) kann sich zwar Umgebungsluft in der Entgasungsvorrichtung befinden, welche während des Verfahrensschrittes b), jedoch durch das erzeugte Rohgas aus der Entgasungsvorrichtung verdrängt wird. Bevorzugt erfolgt der Verfahrensschritt b) unter Sauerstoffmangel, insbesondere frei von Sauerstoff.

Vorteilhafterweise umfasst die Entgasungsvorrichtung einen Entgasungskanal, in welchem der Rohstoff sich während der Durchführung des Verfahrensschrittes b) befindet. Hierbei kann die erforderliche Wärme über die Wandung des Entgasungskanals an den zu vergasenden, organischen Rohstoff übertragen werden. Bevorzugt weist der Entgasungskanal eine Kanalwandung auf, die zumindest teilweise aus Stahl, Keramik oder einem anderen wärmeleitenden Material besteht, mittels derer Wärme auf den Rohstoff übertragen wird. Die Übertragung der Wärme kann auch über zumindest einen zusätzlichen Wärmeträger innerhalb der Entgasungsvorrichtung auf den zu vergasenden organischen Rohstoff übertragen werden, wie z.B. durch erhitzte Kugeln oder Granulate, welche vorzugsweise in den Entgasungskanal eingebracht werden können. Es ist auch möglich, andere Medien mit Wärme aufzuladen und sie dem zu vergasenden organischen Rohstoff zu zuführen wie z.B. heißes Abgas oder Wasserdampf.

Im Vergleich zu einem autothermen Verfahren, besteht der Vorteil bei einer allothermen Verfahrensführung darin, dass das erzeugte Rohgas wesentlich sauberer ist und einem deutlich höheren Heizwert aufweist und insbesondere nicht durch einen Oxidationsprozess bzw. Teilverbrennung des eingesetzten Rohstoffs beeinträchtigt wird. Dies begünstigt eine gleichbleibend hohe Qualität des zu erzeugenden Synthesegases. Eine autotherme Vergasung eines organischen Rohstoffes hat ferner den Nachteil, dass die hierbei verwendeten Vorrichtungs- und Anlagenkomponenten thermisch stark belastet sind, insbesondere infolge von Hochtemperaturkorrosion. Dies ist durch eine allotherme Verfahrensführung weniger problematisch.

In einer einfachen Ausführungsform kann das Fördern des organischen Rohstoffes durch die Entgasungsvorrichtung durch einen Entgasungskanal erfolgen, in welchem eine rotierende Schneckenwendel angeordnet ist.

In Verfahrensschritt c) erfolgt das Abführen des kohlenstoffhaltigen Materials und des Rohgases. Die Erfindung ist nicht darauf beschränkt, auf welche Weise das getrennte Abführen in Verfahrensschritt c) erfolgt. In einer denkbaren Ausführungsform kann die Entgasungsvorrichtung jedoch in einen Gaskanal münden, durch den das Rohgas abgesaugt wird. Ferner kann der Gaskanal zumindest teilweise durch einen Schacht gebildet werden, durch welchen das kohlenstoffhaltige Material abgeführt wird, insbesondere mittels Schwerkraftwirkung, während das Rohgas in eine andere, insbesondere entgegengesetzte, Richtung durch den Gaskanal abgeführt wird.

Wie oben schon erwähnt, kann es sich bei dem organischen Rohstoff zumindest teilweise um einen synthetisch hergestellten Kunststoff handeln, bei dem das gewonnene kohlenstoffhaltige Material in geringer Menge und beispielsweise in Form von Partikeln vorliegt, welche von dem Rohgas aufgenommen sein können. Vorzugsweise kann die Entgasungsvorrichtung oder eine Vergasungsanlage, in der die Entgasungsvorrichtung eingesetzt ist, einen Filter umfassen, mittels dessen das Abführen des kohlenstoffhaltigen Materials getrennt von dem Rohgas erfolgt. Dies ist insbesondere denkbar, wenn das kohlenstoffhaltige Material in Form von Partikeln in dem Rohgas vorliegt, und ein derart mit Partikeln versehenes Rohgas den Filter durchströmt. Dadurch lässt sich das Rohgas und das mittels des Filters aufgefangene kohlenstoffhaltige Material auf einfache Weise getrennt aus der Entgasungsvorrichtung abführen.

In Verfahrensschritt d) erfolgt die Vermengung des Rohgases mit Wasserdampf zur Durchführung der Wassergas-Shiftreaktion (auch: Wassergas-Konvertierungsreaktion). Die Erfindung ist grundsätzlich nicht darauf beschränkt, auf welche Weise Verfahrensschritt d) durchgeführt wird. In einer einfachen Ausführungsform kann Wasserdampf beispielsweise mittels einer oder mehreren Düsen in den oben bereits genannten Gaskanal eingebracht werden, in welchem das aus der Entgasungsvorrichtung geführte Rohgas sich befindet. Der Gaskanal kann durch ein Rohr gebildet sein, welches vorzugsweise auch einen Abschnitt umfasst, in welchem dem Rohgas eine Menge an Wasserdampf für eine Vermischung zugeführt wird. Bevorzugt kann das Gaskanal auch in eine Mischkammer münden oder zumindest teilweise durch eine solche gebildet sein. Die Mischkammer weist gegenüber dem Innenquerschnitt des Gaskanals vorzugsweise größere Abmessungen auf, welche eine Durchmischung des Rohgases und des Wasserdampfes begünstigen.

Es liegt ferner im Rahmen der Erfindung, dass die Wassergas-Shiftreaktion ein oder mehrstufig erfolgt. Bei einer einstufigen Durchführung der Wassergas-Shiftreaktion kann die Menge und die Temperatur des Wasserdampfes und/oder des Rohgases derart gewählt sein, dass die Vermengung des Wasserdampfes und des Rohgases bereits zur Durchführung der Wassergas-Shiftreaktion führt. Bei einer mehrstufigen Durchführung der Wassergas-Shiftreaktion kann das Gemisch nach seiner Erzeugung mittels zusätzlicher Temperiermittel temperiert werden, um die Wassergas-Shiftreaktion durchzuführen, beispielsweise mittels eines Wärmetauschers. Es können ferner ein oder mehrere Heizelemente vorgesehen sein, um die Temperaturführung während der Wassergas-Shiftreaktion zu steuern, insbesondere während oder nachdem das Rohgas mit dem Wasserdampf vermischt wird, beispielsweise in einem Reaktormodul, welches der Wärmetauscher aufweist. Die Erfindung ist darüber hinaus nicht darauf beschränkt, auf welche Weise die Temperierung des Gemisches erfolgen kann.

Es liegt im Rahmen der Erfindung, dass der in Verfahrensschritt d) zugeführte Wasserdampf mit einem vergleichsweise geringen Temperaturniveau, zum Beispiel geringfügig höher als 100°C, oder auch als überhitzter Dampf mit hohem Temperaturniveau von mehr als 1.000°C vorliegt. In beiden Fällen können unterschiedliche Reaktionen erreicht werden, bei denen ein Abkühlen oder ein Überhitzen des Rohgases erfolgen kann. Wird Wasserdampf mit einer Temperatur von geringfügig höher als 100°C zugeführt, kühlt das Rohgas ab und es bilden sich Terpene und/oder Teer und/oder Pyrolyseöle. Wird das Rohgas mittels Wasserdampf mit einer Temperatur oberhalb von 1.000°C hingegen überhitzt, kann die Bildung von Terpenen, Teer und Pyrolyseölen unterbunden werden.

In Verfahrensschritt e) erfolgt ein Abkühlen des mit Wasserdampf vermengten Rohgases unter Kondensation des Wasserdampfes, wodurch das Synthesegas gebildet wird, insbesondere, indem es vom Wasserdampf abgetrennt wird. Das Abkühlen des Gemisches kann beispielsweise mittels eines Kondensationswärmetauschers erfolgen und ermöglicht es, neben dem Wasserdampf weitere, feste Partikel von dem Gemisch zu trennen sowie unerwünschte, wasserlösliche Stoffe wie z.B. Chlor, Schwefel oder Quecksilber und diese über das Kondensat abzuscheiden.

Insbesondere ist es mittels des Kondensationswärmetauschers möglich, das Gemisch auf Temperaturen unterhalb des Kondensationspunktes von 55°C herunterzukühlen. Dadurch kondensiert der Wasserdampf und trennt sich so vom dem zu gewinnenden Synthesegas. Darüber hinaus ist es auf diese Weise möglich, die im Prozess genutzte Wärmeenergie rückzugewinnen und für die Durchführung des erfindungsgemäßen Verfahrens erneut bereit zu stellen, beispielsweise für die Vortrocknung des organischen Rohstoffes zur Einstellung einer gewünschten Restfeuchte. Die Wärme kann aber auch ausgekoppelt werden und zum externen Beheizen von Wohnraum oder etwa zur Aufzucht von Tieren genutzt werden.

In einer vorteilhaften Weiterbildung des Verfahrens erfolgt das Fördern des organischen Rohstoffes in Verfahrensschritt b) mittels einer Rotationsbewegung einer Welle, die zumindest teilweise in einem Entgasungskanal der Entgasungsvorrichtung angeordnet ist und außenumfangsseitig mit einer Mehrzahl an wendelförmig angeordneten Schürelementen besetzt ist. Mittels der Schürelemente wird der organische Rohstoff gleichzeitig umgewälzt und entlang der Erstreckungsachse des Entgasungskanals gefördert.

Zusätzlich oder alternativ kann das Fördern in Verfahrensschritt b) mittels einer Rotationsbewegung einer Förderschnecke erfolgen, die zumindest teilweise in dem Entgasungskanal der Entgasungsvorrichtung angeordnet ist.

In einer einfachen Ausführungsform weist der Entgasungskanal einen kreisrunden oder eckigen Querschnitt, insbesondere Innenquerschnitt, auf. Mittels der Bewegung der in dem Entgasungskanal angeordneten Welle und den wendelförmig angeordneten Schürelementen bewirkt die Rotation der Welle eine Förderbewegung des organischen Rohstoffes, bei der dieser gleichzeitig umgerührt wird. Dies begünstigt die in der Entgasungsvorrichtung stattfindende Reaktion, insbesondere bei allothermer Verfahrensführung.

Vorzugsweise sind die Schürelemente im Wesentlichen jeweils stabförmig ausgebildet und an der Außenumfangsseite der Welle befestigt. An einem der Welle abgewandten Ende kann ein derartiges Schürelement insbesondere ein Plattenelement aufweisen, welches dazu vorgesehen ist, innerhalb der Entgasungsvorrichtung mit dem organischen Rohstoff in Kontakt zu treten und diesen dadurch umzuwälzen bzw. umzurühren. Bevorzugt ist ein derartiges Plattenelement gegenüber einer Ebene, die orthogonal zu der Wellenachse orientiert ist, um eine Erstreckungsachse des stabförmigen Halteelementes geneigt, vorzugsweise um einen Neigungswinkel zwischen 5° und 85°, insbesondere 55°. Diese Neigung des Plattenelementes begünstigt die Förderbewegung.

Es liegt auch im Rahmen der Erfindung, dass die Rotationsbewegung der Welle in ihrem Drehsinn umkehrbar ist, um die Förderrichtung des Rohstoffes in dem Entgasungskanal einstellen zu können. Dadurch lässt sich die Verteilung von organischem Rohstoff in dem Entgasungskanal bedarfsweise verbessern, indem besagter Rohstoff zumindest zeitweise abwechselnd in und entgegen einer Hauptförderrichtung bewegt wird. Hierbei lässt sich ebenso die Verweilzeit des organischen Rohstoffes in der Entgasungsvorrichtung steuern.

Vorteilhafterweise sind die Schürelemente an der Außenumfangsseite der Welle entsprechend einem wendelförmigen Verlauf angeordnet. In anderen Worten sind die Schürelemente dabei sowohl in Bezug auf die Längsachse der Welle als auch außenumfangsseitig derart zueinander versetzt angeordnet, dass sie einen schraubenartigen Verlauf nachbilden. In einer bevorzugten Ausführungsform sind die Schürelemente entlang der Wellenachse in drei Reihen angeordnet, wobei die Reihen an der Außenumfangsseite der Welle paarweise um 120° winkelversetzt zueinander angeordnet sind. Zudem sind die Schürelemente innerhalb der drei Reihen jeweils in gleichmäßigen Abständen voneinander beabstandet angeordnet. Zudem sind die Schürelemente einer der drei Reihen gegenüber den Schürelementen der beiden anderen Reihen entlang der Wellenachse versetzt angeordnet. Dadurch ergibt sich die oben genannte wendelförmige Anordnung. Anstelle dreier Reihen können auch vier, fünf, sechs oder mehr Reihen an Schürelementen vorgesehen sein, die gleichmäßig über den Außenumfang der Welle verteilt angeordnet sind.

In einer vorteilhaften Weiterbildung erfolgt die Zuführung von Wärme in Verfahrensschritt b) zumindest teilweise mittels Strahlung. Hierfür kann die Entgasungsvorrichtung eine oder mehrere elektrisch betriebenen Heizelemente aufweisen, die den Entgasungskanal zumindest teilweise umfangsseitig umschlie-ßen, beispielsweise in einem Winkelbereich von 90°, 180° oder mehr. Insbesondere kann der Entgasungskanal vollständig von zumindest einem Heizelement umschlossen sein.

Bevorzugt erstreckt sich der Entgasungskanal derart, dass sich der organische Rohstoff in Folge von Schwerkraftwirkung in einem Bodenbereich ansammelt. Bevorzugt sind die Heizelemente ebenfalls in dem Bodenbereich angeordnet, um den dort befindlichen organischen Rohstoff beheizen zu können.

Zusätzlich oder alternativ ist es denkbar, dass die Zuführung von Wärme in Verfahrensschritt b) zumindest teilweise mittels Konvektion erfolgt, insbesondere mittels eines Konvektionskanals der sich in Bezug auf eine Erstreckungsachse des Entgasungskanals parallel zu dem Entgasungskanal erstreckt und mit einem temperiertem Medium durchströmt ist. Bevorzugt sind der Entgasungskanal und der Konvektionskanal thermisch miteinander gekoppelt.

In einer vorteilhaften Weiterbildung wird das in Verfahrensschritt c) aus dem Entgasungskanal abgeführte kohlenstoffhaltige Material in einem Verfahrensschritt c1) mit Wasserdampf durchsetzt, wodurch insbesondere zumindest eine in dem kohlenstoffhaltigen Material enthaltene langkettige Kohlenwasserstoffverbindung herausgelöst wird. Das kohlenstoffhaltige Material wird dadurch zu Aktivkohle umgewandelt und bevorzugt als solche bereitgestellt. Vorzugsweise weist der Wasserdampf zum Durchsetzen des kohlenstoffhaltigen Materials in Verfahrensschritt c1) eine Temperatur von bis zu 1.000°C, vorzugsweise bis 1.500°C auf. Der in Verfahrensschritt c1) verwendete Wasserdampf wird in Verfahrensschritt d) mit dem Rohgas zur Erzeugung des Gemisches vermengt. Gemäß vorstehend beschriebener Weiterbildung wird das kohlenstoffhaltige Material qualitativ als hochwertige Aktivkohle bereitgestellt, indem die oben genannten, in dem Kohlenstoff enthaltenen, langkettigen Kohlenwasserstoffverbindungen herausgelöst werden. Bevorzugt werden die derart gelösten langkettigen Kohlenwasserstoffverbindungen mit dem Wasserdampf vermengt und in Verfahrensschritt d) dem Rohgas ebenfalls beigemischt.

In einer weiteren vorteilhaften Weiterbildung erfolgt das Abkühlen des Gemisches in Verfahrensschritt e) zumindest teilweise mittels eines Dampfkessels. Der Dampfkessel ist zumindest teilweise mit Wasser gefüllt, welches infolge der Abkühlung des Gemisches zumindest teilweise in den Wasserdampf gewandelt wird. Dieser Wasserdampf wird vorzugsweise zumindest in Verfahrensschritt d) mit dem Rohgas vermengt.

Es ist ein Vorteil der vorstehend beschriebenen Weiterbildung, dass zumindest ein Teil der Prozesswärme, welcher zur Durchführung der Wassergas-Shiftreaktion erforderlich ist, zur Erzeugung des Wasserdampfes wiederverwendet werden kann. Dies wirkt sich positiv auf den Energiebedarf zur Durchführung des Verfahrens aus. Insbesondere ist es auch möglich, den in dem Dampfkessel erzeugten Wasserdampf auch in Verfahrensschritt c1) zum Durchsetzen des kohlenstoffhaltigen Materials zu verwenden.

In einer vorteilhaften Weiterbildung wird in Verfahrensschritt d) das Gemisch zumindest teilweise mittels eines Wärmetauschers auf eine Temperatur zwischen 600°C bis zu 1500°C temperiert und dadurch zumindest eine in dem Gemisch enthaltene langkettige Kohlenwasserstoffverbindung gecrackt.

Mittels der vorstehend beschriebenen Weiterbildung können die zur Kondensation neigenden langkettigen Kohlenwasserstoffverbindungen im Rohgas gespalten werden. Dadurch erhöht sich der Ertrag des zu gewinnenden Synthesegases sowie sein Heizwert und reduziert die Problematik von Betriebsstörungen, hervorgerufen durch die Bildung von Teer an mechanisch bewegten Bauteilen oder durch das Verstopfen von Rohrleitungen beim Abführen von Synthesegas.

In einer alternativen Verfahrensvariante wird in Verfahrensschritt d) das Gemisch zumindest teilweise mittels eines Wärmetauschers auf eine Temperatur zwischen von 100°C bis 150°C temperiert. Dadurch lassen sich die in dem Gemisch enthaltenen langkettigen Kohlenwasserstoffverbindungen zumindest teilweise erhalten, wobei sich für das Synthesegas bedarfsweise eine Menge an Terpen und/oder Teer und/oder Pyrolyseöle einstellen lässt. Es liegt daher allgemein im Rahmen der Erfindung, dass es durch die Einstellung der Temperatur in Verfahrensschritt d) möglich ist, die Zusammensetzung des Synthesegases gezielt zu beeinflussen.

In einer vorteilhaften Weiterbildung wird das in Verfahrensschritt c) abgeführte kohlenstoffhaltige Material in einem Verfahrensschritt f) in eine Vergasungskammer gegeben und unter Zuführung von Luftsauerstoff als Oxidationsmittel ein kohlenstoffmonoxidhaltiges Schwachgas gebildet, welches dem Synthesegas beigemischt wird.

Insbesondere kann die Menge von Schwachgas, welche dem Synthesegas beigemischt wird, gezielt eingestellt werden, beispielsweise mittels eines steuerbaren Mischventils. Bevorzugt ist die Vergasungskammer mittels einer Schleusenvorrichtung von der Entgasungsvorrichtung getrennt. Insbesondere kann das Schwachgas dem Synthesegas über eine Schwachgasleitung zugeführt werden.

Bei dem Schwachgas handelt es sich um ein Erzeugnis, welches sich nicht für die direkte Verbrennung eignet und einen vergleichsweise hohen Anteil an Kohlenstoffmonoxid aufweist. Als Zugabe für das Synthesegas können sich allerdings für die spätere Verbrennung eines derartigen Synthesegases Vorteile hinsichtlich ungewünschter Stickoxidemissionen erzielen lassen. Außerdem lassen sich auch sehr gute Ergebnisse hinsichtlich der Klopffestigkeit erreichen, wenn ein mit Schwachgas versetztes Synthesegas in einem Blockheizkraftwerk eingesetzt wird. Die bei der Herstellung des Schwachgases erzeugte Wärmeenergie kann abgeführt werden und beispielsweise zum Heizen oder zum Trocknen des organischen Rohstoffs verwendet werden. Darüber hinaus kann bei Rohstoffen mit hohen Gehalten an Festkohlenstoff eine Steigerung des Anlagenwirkungsgrades erzielt werden.

In einer vorteilhaften Weiterbildung des Verfahrens ist der Entgasungskanal in Bezug auf seine Erstreckungsachse derart geneigt, dass der organische Rohstoff zumindest teilweise mittels Schwerkraftwirkung entlang der Erstreckungsachse gefördert wird. Hierbei wird der organische Rohstoff zumindest in das kohlenstoffhaltige Material und das Rohgas aufgetrennt. In Verfahrensschritt c) wird das kohlenstoffhaltige Material an einer unteren Öffnung des Entgasungskanals abgeführt und das Rohgas an einer oberen Öffnung des Entgasungskanals.

Insbesondere beträgt ein Neigungswinkel zwischen der Erstreckungsachse des Entgasungskanals und einer horizontal verlaufenden Bezugsebene 20 bis 80 Winkelgrade. Dementsprechend ist die Erstreckungsachse vorzugsweise um 10 bis 70 Winkelgraden gegenüber einer vertikalen Schwerkraftrichtung geneigt. Dadurch wirkt insbesondere der entlang der Erstreckungsachse gerichtete Anteil der Schwerkraft auf das organische Rohmateiral und unterstützt dadurch zumindest teilweise die Förderbewegung.

Insbesondere wird die Förderbewegung auch durch die Rotationsbewegung einer mit Schürelementen besetzten Welle und/oder einer Förderschnecke bewirkt. Untersuchungen haben gezeigt, dass die geneigte Ausrichtung des Entgasungskanals in diesem Fall vorteilhaft ist, da es nicht zu einer Verstopfung des Entgasungskanals kommt und das darin befindliche Rohmaterial bzw. das erzeugte kohlenstoffhaltige Material aufgelockert vorliegt. Zudem kann dadurch die erforderiche Antriebsleistung für die Rotationsbewegung der mit Schürelementen besetzten Welle oder der Förderschnecke gering sein, sodass das jeweils eingesetzte Antriebsmittel, insbesondere ein Motor, mit einer entsprechend geringen Nennleistung dimensioniert sein kann.

Ein Vorteil in der Verwendung einer Förderschnecke bei einer geneigten Ausrichtung des Entgasungskanals besteht darin, dass das Rohmaterial bzw. das gebildete kohlenstoffhaltige Material mit einer gut einstellbaren Fördergeschwindigkeit entlang der Erstreckungsachse des Entgasungskanals gefördert werden kann und dabei insbesondere nicht infolge von Schwerkraftwirkung unkontrolliert aus dem Entgasungskanal gelangt. Vielmehr kann das Rohmaterial bzw. das kohlenstoffhaltige Material durch einen kontinuierlich verlaufenden Schneckenflügel, also einem spiralförmig geformten dünnwandigen Element, bevorzugt Blech, zurückgehalten werden oder in Abhängigkeit der Rotationsgeschwindigkeit gefördert werden.

In einer vorteilhaften Weiterbildung wird das in Verfahrensschritt c) aus der Entgasungsvorrichtung abgeführte kohlenstoffhaltige Material in einem Verfahrensschritt c2) mit Wasser, insbesondere Wassernebel, durchsetzt. Dadurch wird das kohlenstoffhaltige Material abgekühlt, insbesondere von über 800°C auf unter 100°C. Hierdurch lässt sich vermeiden, dass sich das kohlenstoffhaltige Material nach einem Austritt aus der Entgasungsvorrichtung aufgrund hoher Temperatur und einem Kontakt mit Sauerstoff entzündet. Dadurch lassen sich insbesondere die Vorteile einer allothermen Verfahrensführung in der Entgasungsvorrichtung beibehalten.

Vorzugsweise erfolgt die Vermischung des Rohgases mit Wasserdampf zu dem Gemisch aus Verfahrensschritt d) vor dem getrennten Abführen des kohlenstoffhaltigen Material und dem Rohgas gemäß Verfahrensschritt c). In einer vorteilhaften Weiterbildung kann dafür in Verfahrensschritt c2) Wasserdampf gebildet werden, welcher in Verfahrensschritt d) mit dem Rohgas vermengt wird. Dies erfolgt bevorzugt, indem der Wasserdampf an dem unterseitigen Ende in den Entgasungskanal geführt wird, um in dem Entgasungskanal das Gemisch zu bilden. Dadurch kann das Rohgas beim getrennten Abführen in Verfahrensschritt c) in dem Gemisch vorliegen.

Mittels der vorstehend beschriebenen Weiterbildung lässt sich ein hohes Maß an Funktionsintegration in der Verfahrensführung erreichen, da das Wasser oder der Wassernebel einerseits zum Abkühlen des kohlenstoffhaltigen Materials verwendet wird und andererseits der dabei gebildete Wasserdampf zur Vermischung mit dem Rohgas und damit der Erzeugung des Gemischs gemäß Verfahrensschritt d) dient. Darüber hinaus ermöglicht die Neigung des Entgasungskanals eine strömungstechnische Führung des Wasserdampfes und/oder des Gemischs in dem Entgasungskanal zu seiner oberen Öffnung, damit dieses dort entnommen werden kann. Gleichzeitig kann das gebildete kohlenstoffhaltige Material an der entgegengesetzt liegenden, unteren Öffnung des Entgasungskanals entnommen werden, wodruch eine einfache getrennte Abführung in Verfahrensschritt c) erfolgen kann.

In einer vorteilhaften Weiterbildung wird das in Verfahrensschritt c2) gekühlte kohlenstoffhaltige Material durch einen Wärmetauscher geleitet. Insbesondere kann der Wärmetauscher einen Kühlkanal umfassen, in dem ein Fördermittel angeordnet ist, um das kohlenstoffhaltige Material entlang einer Förderrichtung in einen Sammelbehälter zu fördern. Vorzugsweise ist der Kühlkanal von einem Kühlmantel umgeben. Bevorzugt dient der Kühlmantel zumindest teilweise zur Führung eines Kühlmediums, welches derart temperiert ist, eine Wärme von dem kohlenstoffhaltigen Material über eine Außenseite des Kühlkanals aufzunehmen. Das Fördermittel kann eine Förderschnecke umfassen, mittels derer das kohlenstoffhaltige durch den Kühlkanal gefördert wird.

Wie oben erläutert, wird die Aufgabe auch gelöst durch eine Entgasungsvorrichtung, die sich insbesondere für das erfindungsgemäße Verfahren oder eine vorteilhafte Weiterbildung davon eignet und dafür vorgesehen ist und umgekehrt. Es gelten damit die obigen Ausführungen zum Verfahren sowie seinen vorteilhaften Weiterbildungen entsprechend.

Die Entgasungsvorrichtung umfasst einen Entgasungskanal, welcher sich entlang einer Erstreckungsachse erstreckt und einen Hohlraum ausbildet, welcher dazu vorgesehen ist, einen organischen Rohstoff aufzunehmen.

Zudem umfasst die Entgasungsvorrichtung zumindest ein Heizelement, welches wärmeleitend mit dem Hohlraum des Entgasungskanals verbunden ist und dazu vorgesehen ist, den in dem Hohlraum aufgenommenen organischen Rohstoff zu erhitzen. Bevorzugt handelt es sich bei dem Heizelement um eine Heizspirale, mittels derer der organische Rohstoff mittels Strahlung erwärmbar ist. Zusätzlich oder alternativ kann das Heizelement ein Konvektionsrohr umfassen, welches mit einem temperierten Medium durchströmbar ist, um eine konvektive Wärmeübertragung zu erreichen.

Ferner weist die Entgasungsvorrichtung eine Welle auf, welche drehbar gelagert ist und zumindest teilweise in dem Hohlraum des Entgasungskanals angeordnet ist. An einer Außenumfangsseite ist die Welle mit einer Mehrzahl an wendelförmig angeordneten Schürelementen besetzt. Die Schürelemente sind dazu vorgesehen, um bei einer Rotationsbewegung der Welle den in dem Entgasungskanal aufgenommenen und erhitzten organischen Rohstoff umzuwälzen und gleichzeitig entlang der Erstreckungsachse zu fördern.

Zusätzlich oder alternativ weist die Entgasungsvorrichtung eine Förderschnecke auf, die zumindest teilweise in einem Entgasungskanal der Entgasungsvorrichtung angeordnet und zumindest dazu vorgesehen ist, um bei einer Rotationsbewegung der Welle den in dem Entgasungskanal aufgenommenen und erhitzten organischen Rohstoff entlang der Erstreckungsachse zu fördern.

Insbesondere ist die Entgasungsvorrichtung mit den vorstehend genannten Merkmalen zur Durchführung des Verfahrensschrittes b) des erfindungsgemäßen Verfahrens vorgesehen und geeignet. Hinsichtlich der damit erreichbaren Vorteile gelten die Ausführungen in Bezug auf Verfahrensschritt b) des erfindungsgemäßen Verfahrens daher entsprechend.

Die Erfindung betrifft auch eine Vergasungsanlage nach Anspruch 14, welche vorzugsweise zur Durchführung des erfindungsgemäßen Verfahrens bzw. einer vorteilhaften Weiterbildung davon vorgesehen und geeignet ist und umgekehrt.

Die Vergasungsanlage umfasst eine erfindungsgemäße Entgasungsvorrichtung welche über einen Gaskanal mit einem Reaktormodul fluidleitend verbunden ist, um das in der Entgasungsvorrichtung erzeugbare Rohgas aus dem Entgasungskanal in das Reaktormodul zu leiten, wobei der Gaskanal zumindest eine Einblasöffnung für Wasserdampf aufweist, um bei Einblasen von Wasserdampf ein Gemisch aus Rohgas und Wasserdampf für die Durchführung einer Wassergas-Shiftreaktion zu erzeugen. Das Reaktormodul ist dazu vorgesehen, ein Gemisch aus Rohgas und Wasserdampf zu temperieren, insbesondere zu erhitzen oder abzukühlen. Hierfür weist das Reaktormodul einen ersten Wärmetauscher auf.

Ferner weist die Vergasungsanlage ein Kühlmodul mit zumindest einem zweiten Wärmetauscher auf, insbesondere einem Kondensationswärmetauscher, welcher dazu vorgesehen ist, das Gemisch aus Rohgas und Wasserdampf abzukühlen und insbesondere mittels Kondensation von Wasserdampf das Synthesegas zu erzeugen, insbesondere abzuscheiden.

Bevorzugt ist die vorstehend beschriebene Vergasungsanlage dafür ausgebildet und vorgesehen, das erfindungsgemäße Verfahren oder eine vorteilhafte Weiterbildung davon durchzuführen. Hinsichtlich der dabei erzielbaren Vorteile und der Wirkweise sei auf die Ausführungen bezüglich des erfindungsgemäßen Verfahrens sowie seiner vorteilhaften Weiterbildungen verwiesen.

In einer vorteilhaften Weiterbildung der Vergasungsanlage erstreckt sich der Gaskanal zumindest zwischen dem Entgasungskanal und der Reaktorkammer. Die zumindest eine Einblasöffnung ist dabei zwischen dem Entgasungskanal und der Reaktorkammer angeordnet. Es liegt im Rahmen der Erfindung, dass die Wassergas-Shiftreaktion zumindest teilweise in dem Gaskanal stattfindet und/oder in dem Reaktormodul.

Zusätzlich oder alternativ wird der Gaskanal zumindest teilweise durch einen Schacht gebildet, welcher dazu vorgesehen ist, das kohlenstoffhaltige Material aus dem Entgasungskanal abzuführen, und wobei die zumindest eine Einblasöffnung im Bereich des Schachtes angeordnet ist. Dadurch ist es möglich, das aus dem Entgasungskanal tretende kohlenstoffhaltige Material mit Wasserdampf zu durchsetzen, bevor der Wasserdampf mit dem Rohgas vermengt wird, um die Wassergas-Shiftreaktion durchzuführen.

In einer vorteilhaften Weiterbildung weist der erste Wärmetauscher zumindest eine erste Wärmetauscherspirale auf, welche mit dem Gaskanal fluidleitend verbunden ist und dazu vorgesehen ist, um das Gemisch aus Rohgas und Wasserdampf durch einen temperierbaren Reaktorraum zu führen. Das Kühlmodul weist zumindest einen Dampfkessel mit einer Ringspirale auf, welche mit der Wärmetauscherspirale des ersten Wärmetauschers fluidleitend verbunden ist und zumindest bereichsweise durch ein Wasserbad verläuft. Der Dampfkessel ist zur Erzeugung von Wasserdampf vorgesehen und mittels einer Dampfleitung mit der Einblasöffnung des Gaskanals verbunden. Vorzugsweise weist das Reaktormodul eines oder mehrere Heizelemente auf, um den Reaktorraum zu temperieren.

Bevorzugt wird die vorstehend genannte Dampfleitung zumindest teilweise durch eine zweite Wärmetauscherspirale gebildet, welche zwischen dem Dampfkessel und der Einblasöffnung des Gaskanals durch den Reaktorraum des ersten Wärmetauschers verläuft. Bevorzugt sind die erste Wärmetauscherspirale und die zweite Wärmetauscherspirale innerhalb des Reaktorraums thermisch gekoppelt und vorzugsweise in Gestalt zweier ineinander verwundener Spiralen ausgebildet.

Vorzugsweise ist die durch den Dampfkessel verlaufende Ringspirale fluidleitend mit dem Kondensationswärmetauscher verbunden, welcher dazu ausgebildet ist, das Gemisch aus Rohgas und Wasserdampf abzukühlen und den Wasserdampf zumindest teilweise zu kondensieren, um das Synthesegas zu erzeugen.

In einer vorteilhaften Weiterbildung ist der Schacht mit einem Oxidationsmodul verbunden, welches dazu vorgesehen ist, das kohlenstoffhaltige Material zu oxidieren und ein Schwachgas zu erzeugen. Das Oxidationsmodul weist eine temperierbare Oxidationskammer mit einer Schwachgasleitung auf, um das erzeugte Schwachgas abzuführen. Der zweite Wärmetauscher ist zumindest mittelbar mit einer Synthesegasleitung verbunden, um das erzeugte Synthesegas abzuführen. Die Schwachgasleitung und die Synthesegasleitung sind über ein Mischventil miteinander verbunden.

Vorzugsweise ist das Oxidationsmodul über eine Schachtvorrichtung mit der Entgasungsvorrichtung verbunden, über welche das kohlenstoffhaltige Material in das Oxidationsmodul geführt werden kann. Ein Schleusensystem sorgt dafür, dass der Schacht und das Oxidationsmodul verfahrenstechnisch, gastechnisch und reaktionstechnisch voneinander getrennt sind.

Die Aufgabe der Erfindung wird auch gelöst mittels einer Vergasungsanlage nach Anspruch 15, welche vorzugsweise zur Durchführung des erfindungsgemäßen Verfahrens bzw. einer vorteilhaften Weiterbildung davon vorgesehen und geeignet ist und umgekehrt.

Die Vergasungsanlage weist eine erfindungsgemäße Entgasungsvorrichtung auf, deren Entgasungskanal mit seiner Erstreckungsachse geneigt ist und eine obere und eine untere Öffnung aufweist. Die untere Öffnung ist dazu vorgesehen, um das in der Entgasungsvorrichtung erzeugbare kohlenstoffhaltige Material auszugeben und gleichzeitig Wasserdampf in die Entgasungsvorrichtung, insbesondere in den Entgasungskanal, aufzunehmen. Die obere Öffnung ist über einen Gaskanal mit einem Reaktormodul fluidleitend verbunden, um das in der Entgasungsvorrichtung erzeugbare Rohgas und den aufgenommenen Wasserdampf in Gestalt eines Gemischs aus dem Entgasungskanal in das Reaktormodul zu leiten. Das Reaktormodul weist einen ersten Wärmetauscher auf, welcher dazu vorgesehen ist, das Gemisch aus Rohgas und Wasserdampf zu temperieren, insbesondere für eine Wassergas-Shiftreaktion. Ferner weist die Vergasungsanlage ein Kühlmodul mit zumindest einem zweiten Wärmetauscher auf, der insbesondere als Kondensationswärmetauscher ausgebildet sein kann. Der zweite Wärmetauscher ist dazu vorgesehen, das Gemisch aus Rohgas und Wasserdampf abzukühlen und insbesondere unter Kondensation von Wasserdampf ein Synthesegas zu erzeugen, insbesondere abzuscheiden.

Die vorstehend beschriebene Vergasungsanlage ist insbesondere zur Durchführung des erfindungsgemäßen Verfahrens oder einer vorteilhaften Weiterbildung hiervon geeignet und vorgesehen und umgekehrt. Es gelten damit die obigen Ausführungen zum Verfahren sowie seinen vorteilhaften Weiterbildungen entsprechend.

Infolge der Neigung des Entgasungskanals weist dieser, wie oben beschrieben, eine obere und eine untere Öffnung auf. Das erzeugte kohlenstoffhaltige Material kann infolge der Förderwirkung einer Förderschnecke und jenem Anteil der Schwerkraft, welcher entlang der Erstreckungsachse des Entgasungskanals gerichtet ist, an der unteren Öffnung aus dem Entgasungskanal austreten.

Beim Austreten des kohlenstoffhaltigen Materials kann dieses eine Temperatur oberhalb von 800°C aufweisen. Um ein Entzünden des kohlenstoffhaltigen Materials zu vermeiden, sobald dieses mit Sauerstoff in Kontakt tritt, kann dieses mit Wasser oder einem Wassernebel durchsetzt werden und dadurch auf unter 100°C abgekühlt werden. Insbesondere ist eine Düse zum Einsprühen von Wasser oder Wassernebel unterhalb der unteren Öffnung des Entgasungskanals angeordnet. Infolge des Einsprühens von Wasser oder Wassernebel kann Wasserdampf entstehen, welcher an der unteren Öffnung des Entgasungskanals in den Entgasungskanal treten kann und sich dort mit dem Rohgas zu dem Gemisch vermengt. Infolge thermischer Effekte wird das Gemisch sowie die darin enthaltenen Bestandteile in Gestalt des Rohgases und des Wasserdampfes zu der oberen Öffnung des Entgasungskanals geleitet, durch das sie aus dem Entgasungskanal und in das Reaktormodul treten können.

In einer vorteilhaften Weiterbildung weist der erste Wärmetauscher zumindest eine erste Wärmetauscherspirale auf, welche mit dem Gaskanal fluidleitend verbunden ist und dazu vorgesehen ist, um das Gemisch aus Rohgas und Wasserdampf durch einen temperierbaren Reaktorraum zu führen. Das Kühlmodul weist zumindest einen Dampfkessel mit einer Ringspirale auf, welche mit der Wärmetauscherspirale des ersten Wärmetauschers fluidleitend verbunden ist und zumindest bereichsweise durch ein Wasserbad verläuft. Der Dampfkessel ist zur Erzeugung von Wasserdampf vorgesehen und mittels einer Dampfleitung mit der Einblasöffnung des Gaskanals verbunden. Vorzugsweise weist das Reaktormodul eines oder mehrere Heizelemente auf, um den Reaktorraum zu temperieren.

Bevorzugt wird die vorstehend genannte Dampfleitung zumindest teilweise durch eine zweite Wärmetauscherspirale gebildet, welche zwischen dem Dampfkessel und der Einblasöffnung des Gaskanals durch den Reaktorraum des ersten Wärmetauschers verläuft. Bevorzugt sind die erste Wärmetauscherspirale und die zweite Wärmetauscherspirale innerhalb des Reaktorraums thermisch gekoppelt und vorzugsweise in Gestalt zweier ineinander verwundener Spiralen ausgebildet.

Vorzugsweise ist die durch den Dampfkessel verlaufende Ringspirale fluidleitend mit dem Kondensationswärmetauscher verbunden, welcher dazu ausgebildet ist, das Gemisch aus Rohgas und Wasserdampf abzukühlen und den Wasserdampf zumindest teilweise zu kondensieren, um das Synthesegas abzutrennen und dadurch insbesondere zu erzeugen.

In einer vorteilhaften Weiterbildung weist die Vergasungsanlage ein Oxidationsmodul auf, welches dazu vorgesehen ist, das kohlenstoffhaltige Material zu oxidieren und ein Schwachgas zu erzeugen. Das Oxidationsmodul weist eine temperierbare Oxidationskammer mit einer Schwachgasleitung auf, um das erzeugte Schwachgas abzuführen. Der zweite Wärmetauscher ist zumindest mittelbar mit einer Synthesegasleitung verbunden, um das erzeugte Synthesegas abzuführen. Die Schwachgasleitung und die Synthesegasleitung sind über ein Mischventil und/oder Regelventil miteinander verbunden.

Vorzugsweise ist das Oxidationsmodul mit der Entgasungsvorrichtung verbunden, über welche das kohlenstoffhaltige Material in das Oxidationsmodul geführt werden kann. Ein Schleusensystem sorgt dafür, dass der Schacht und das Oxidationsmodul verfahrenstechnisch, gastechnisch und reaktionstechnisch voneinander getrennt sind.

Weitere Vorteile der Erfindung sowie vorteilhafter Weiterbildungen werden nachfolgend anhand von Ausführungsbeispielen und den Figuren erläutert.

### Es zeigen

- Figur 1: eine schematische Darstellung einer Vergasungsanlage zur Erzeugung eines wasserstoffhaltigen Synthesegases gemäß einer ersten Anlagenkonfiguration;
- Figur 2: eine schematische Darstellung einer Entgasungsvorrichtung;
- Figur 3: eine schematische Darstellung einer Vergasungsanlage zur Erzeugung eines wasserstoffhaltigen Synthesegases gemäß einer zweiten Anlagenkonfiguration; und
- Figur 4: eine schematische Darstellung eines Bestandteils einer Vergasungsanlage für eine dritte Anlagenkonfiguration.

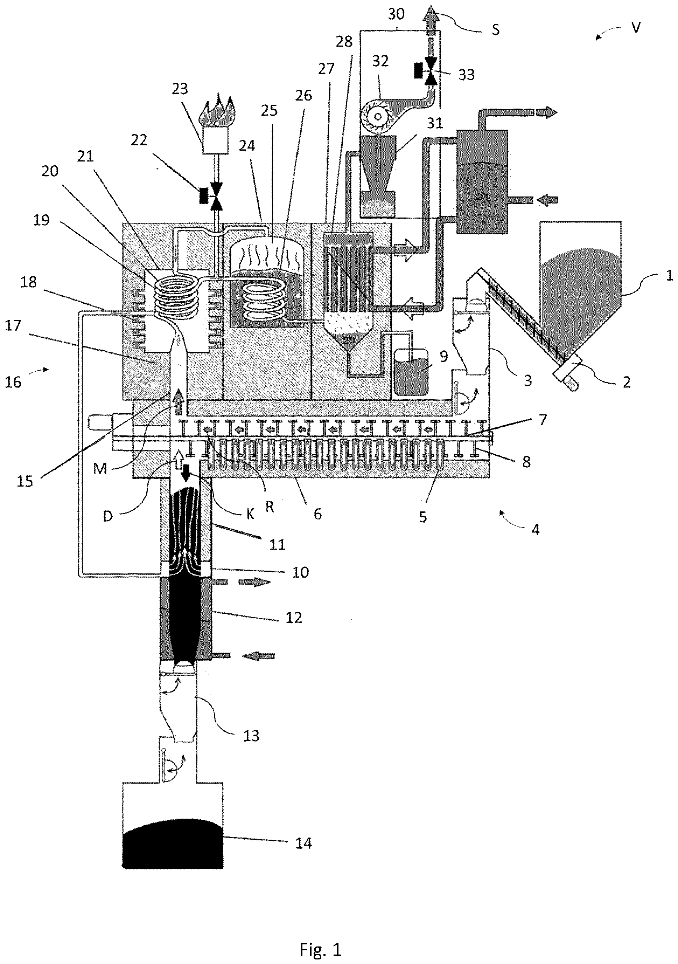

Figur 1 zeigt eine erste Ausführungskonfiguration einer Vergasungsanlage V zur Erzeugung von wasserstoffhaltigem Synthesegas S.

Die Vergasungsanlage V umfasst einen Bunker 1, der mit einem organischen Rohstoff befüllt ist. Bei dem organischen Rohstoff handelt es sich vorliegen um Maisspindeln. Es kann sich hierbei grundsätzlich jedoch um einen beliebigen Festkörper handeln, der aus einem Material hergestellt ist, das Kohlenstoff oder eine Kohlenstoffverbindung enthält. Insbesondere kann es sich dabei um ein beliebiges, natürlich vorkommendes Material aber auch künstlich hergestellte Produkte handeln. Beispielsweise handelt es sich bei dem Rohstoff um pflanzliche Abfälle, wie etwa Maisspindeln, Überreste aus der Lebensmittelproduktion, wie etwa Teigwaren oder industrielle Abfälle, beispielsweise Papierreste oder Kunststoff handeln.

Der biologische Rohstoff hat in dem in Figur 1 gezeigten Ausführungsbeispiel eine Restfeuchte von etwa 15%. Für die Verwendung in der gemäß Figur 1 gezeigten Anlage V kann die Restfeuchte grundsätzlich jedoch bis zu 30% betragen.

Ein Schneckenförderer 2 dient dazu, den in dem Bunker 1 enthaltenen organischen Rohstoff zu einer ersten Schleusenvorrichtung 3 zu fördern. Hierfür weist der Schneckenförderer 2 einen Förderkanal mit einer darin drehbar gelagerten Förderschnecke auf, mittels derer der in dem Bunker 1 enthaltene Rohstoff zu der ersten Schleusenvorrichtung 3 gefördert wird.

Die erste Schleusenvorrichtung 3 weist einen Raum auf, der mittels zweier Schleusentüren verschließbar ist. Die Schleusentüren sind elektrisch derart gesteuert, dass im geöffneten Zustand einer der Schleusentüren die jeweils andere Schleusentür geschlossen ist. Dadurch ist es möglich, die unterhalb der ersten Schleusenvorrichtung 3 angeordnete Entgasungsvorrichtung 4, welche nachfolgend noch im Detail beschrieben ist, hermetisch von dem Schneckenförderer 2 und dem Bunker 1 zu trennen.

Die Entgasungsvorrichtung 4 dient dazu, den Rohstoff mittels eines allothermen Prozesses in ein Rohgas R und das kohlenstoffhaltige Material K aufzutrennen. Hierfür weist die Entgasungsvorrichtung 4 einen Entgasungskanal 6 auf, in welchen der organische Rohstoff aus der ersten Schleusenvorrichtung 3 gegeben wird und in welchem unter Zufuhr von Wärme die oben genannte, allotherme Reaktion stattfindet. Die Temperaturen für die Durchführung der allothermen Reaktion liegen zwischen 800°C und 1200°C.

Die Entgasungsvorrichtung 4 ist in einem Bodenbereich mit elektrischen Heizelementen 5 versehen, die den Entgasungskanal 6 radial umlaufend in einem Winkelbereich von 180° umschließen. Dadurch ist es möglich, den in dem Entgasungskanal 6 befindlichen Rohstoff mittels Strahlung zu erhitzen. Insbesondere kann der Entgasungskanal 6 hierfür im Bereich einer Kanalwandung mit Keramik versehen sein, die die Wärmeübertragung von den Heizelementen 5 auf den Rohstoff für die allotherme Reaktion begünstigt.

Die Durchführung der allothermen Reaktion wird dadurch ermöglicht, dass in dem Entgasungskanal durch die Erzeugung des Rohgases R eine inerte Atmosphäre geschaffen wird, indem das Rohgas R die in dem Entgasungskanal befindliche sauerstoffhaltige Umgebungsluft verdrängt. Dadurch wird insbesondere eine autotherme Verfahrensführung unterbunden.

Zusätzlich oder alternativ zu den Heizelementen 5 kann in hier nicht gezeigter Weise auch ein Konvektionskanal vorgesehen sein, welcher mit einem temperierten Medium, beispielsweise Gas durchströmt ist und sich im Wesentlichen parallel zu dem Entgasungskanal 6 erstreckt. Dadurch kann die Wärme von dem Medium konvektiv auf den Rohstoff übertragen werden und zu der gewünschten Reaktion führen.

Das Fördern des organischen Rohstoffes erfolgt mittels einer Rotationsbewegung einer Welle 7, die in dem Entgasungskanal 6 angeordnet ist und außenumfangsseitig mit einer Mehrzahl an wendelförmig angeordneten Schürelementen 8 besetzt ist. Mittels der Schürelemente 8 ist es möglich, den organischen Rohstoff gleichzeitig umzuwälzen und entlang des Entgasungskanals 6 der Entgasungsvorrichtung 4 zu fördern.

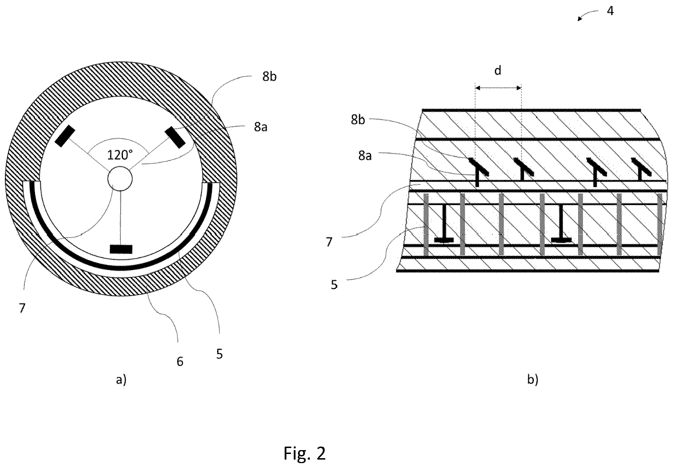

Wie in Bezug auf Figur 2 noch im Detail erläutert ist, umfassen die Schürelemente 8 jeweils ein radial zu der Welle 7 verlaufendes Halteelement und ein daran endseitig angeordnetes Plattenelement. Die Halteelemente sind sowohl entlang der Wellenachse als auch umfangsseitig versetzt zueinander angeordnet, wodurch sich eine wendelartige Anordnung ergibt.

Die Schürelemente 8 dienen infolge ihrer jeweiligen Ausgestaltung und ihrer Anordnung auf der Welle 7 einerseits zum Durchmischen des organischen Rohstoffes innerhalb des Entgasungskanals 6 und andererseits zum Erzeugen einer Förderbewegung. Die Wirkweise zur Erzeugung der Förderbewegung entspricht hierbei im Wesentlichen der Wirkweise eines Schneckenförderers. Im Unterschied zum Schneckenförderer bilden die Schürelemente jedoch keine geschlossene Fläche, mittels derer eine kontinuierliche Bewegung des Rohstoffes erfolgen würde. Stattdessen ermöglicht es eine räumlich getrennte Anordnung der Schürelemente, den Rohstoff schlagartig zu durchmischen. Zudem ermöglicht es die räumliche Trennung der Schürelemente 8 dem gewonnenen Rohgas R mit einem geringen Strömungswiderstand aus dem Entgasungskanal 6 zu entweichen.

Die chemische Reaktion, die in der Entgasungsvorrichtung 4 stattfindet, variiert in Abhängigkeit davon, welche chemische Zusammensetzung der jeweils verwendete organische Rohstoff aufweist. Infolge der organischen Beschaffenheit des Rohstoffes umfasst das dabei gewonnene Rohgas R jedoch stets Kohlenstoffmonoxid (CO) und Wasserstoff (H₂), deren Anteile in Bezug auf Vol% und Masse% variieren können. Neben dem Rohgas R fällt infolge der Reaktion in der Entgasungsvorrichtung 4 auch das kohlenstoffhaltige Material K als Festkörper ab.

Der Entgasungskanal 6 der Entgasungsvorrichtung 4 mündet in einen Gaskanal 15, welcher teilweise durch einen Schacht 11 gebildet wird und in welchen das kohlenstoffhaltige Material K infolge von Schwerkraft abfällt. Der Gaskanal 15 weist im Bereich des Schachtes 11 eine Dampfzuführöffnung 10 auf, über welche dem Schacht 11 und damit auch dem Gaskanal 15 Wasserdampf D zugeführt wird, wodurch das in dem Schacht abfallende kohlenstoffhaltige Material K mit Wasserdampf D durchsetzt wird.

Infolge der Durchsetzung des kohlenstoffhaltigen Materials K mit Wasserdampf D werden sog. langkettige Kohlenwasserstoffverbindungen aus dem kohlenstoffhaltigen Material K herausgelöst. Dadurch wird das kohlenstoffhaltige Material K derart behandelt, dass es anschließend als hochwertige Aktivkohle vorliegt, welche in einer Kühlkammer 12 heruntergekühlt und mittels einer zweiten Schleusenvorrichtung 13 in einen Sammelbehälter 14 gegeben werden kann.

Die aus dem kohlenstoffhaltigen Material K gelösten langkettigen Kohlenwasserstoffverbindungen gelangen gemeinsam mit dem Wasserdampf D in einen Bereich des Gaskanals 15, in dem sich das Rohgas R, der Wasserdampf D und die langkettigen Kohlenwasserstoffverbindungen zu einem Gemisch M vermischen und anschließend in einem Reaktormodul 16 nachbehandelt werden.

Das Reaktormodul 16 umfasst eine Mehrzahl an Heizelementen 18 sowie zwei gegenläufige Wärmetauscherspiralen 19, 20, die in einer Reaktorkammer 21 angeordnet sind. Die Wärmetauscherspirale 19 dient dazu, das zuvor erzeugte Gemisch M aus Rohgas R, Wasserdampf D und die langkettigen Kohlenwasserstoffverbindungen durch die Reaktorkammer 21 zu führen. Die Wärmetauscherspirale 19 ist hierfür fluidleitend mit dem Gaskanal 15 verbunden. Die Wärmetauscherspirale 20 steht in wärmeleitender Verbindung mit der Wärmetauscherspirale 19 und führt Wasserdampf, mittels dessen das in der Wärmetauscherspirale 19 enthaltene Gemisch M erhitzt wird. Bei dem Wasserdampf, welcher in der Wärmetauscherspirale 20 geführt ist, handelt es sich um den Wasserdampf D, welcher nach der Wärmeübertragung in dem Reaktormodul 16 für die Durchsetzung des kohlenstoffhaltigen Materials K verwendet wird.

Die in dem Gaskanal 15 und dem Reaktormodul 16 ablaufende Reaktion wird als Wassergas-Shiftreaktion oder Wassergas-Konvertierungsreaktion bezeichnet. Diese Reaktion sorgt für die Verringerung des Kohlenstoffmonoxid Anteils im Gemisch M und dient dabei der Erzeugung von weiterem Wasserstoff. Je nach eingestellter Temperatur in dem Reaktor lässt sich der Mengenanteil des gewonnenen Wasserstoffs beeinflussen. Im Falle einer sog. Hochtemperatur Shiftreaktion, bei Temperaturen von 600°C bis 1500°C lässt sich ein höherer Anteil des Wasserstoffgehaltes einstellen als bei niedrigeren Temperaturen. Darüber hinaus bewirkt eine derart hohe Temperatur eine Zerlegung der langkettigen Kohlenwasserstoffverbindungen, wodurch insbesondere die Anteile von Teer oder Pyrolyseöl in dem Gemisch M reduziert werden können. Alternativ kann bei Durchführung der Reaktion bei 100°C bis 150°C hingegen eine Beibehaltung der langkettigen Kohlenwasserstoffverbindungen erzielt und dadurch die Anteile von Teer oder Pyrolyseöl in dem Gemisch M und damit auch in dem zu erzeugenden Synthesegas S gesteigert werden.

Die Wärmetauscherspirale 19 ist ferner mit einem Ablass verbunden, der über ein Ventil 22 geöffnet werden kann, um beispielsweise bei einem Anlauf der Vergasungsanlage V ein minderwertiges Gemisch M an einem Brenner 23 abfackeln zu können.

Bei geschlossenem Ventil 22 gelangt das Gemisch M aus Rohgas R, Wasserdampf D und den ggf. noch in dem Gemisch enthaltenen Kohlenwasserstoffverbindungen in einen zweiten Wärmetauscher, der einen Dampfkessel 24 und einen Kondensationswärmetauscher 27 umfasst. In dem hier gezeigten Ausführungsbeispiel gelangt das Gemisch M aus der Wärmetauscherspirale 19 in eine Rohrspirale, die durch einen Dampfkessel 24 verläuft. Der Dampfkessel 24 ist mit Wasser 26 befüllt und dient dazu, das in der Rohrspirale geführte Gemisch M abzukühlen. Die dabei auf das Wasser 26 übertragene Wärme dient der Erzeugung von Wasserdampf D, welcher der Wärmetauscherspirale 20 des Reaktors 16 zugeführt wird. In dem in Figur 1 gezeigten Ausführungsbeispiel der Vergasungsanlage wird der Wasserstand in dem Dampfkessel 24 automatisch aufgefüllt.

Aus dem Dampfkessel 24 gelangt das Gemisch M in den Kondensationswärmetauscher 27. In diesem wird das Gemisch M auf eine Temperatur unterhalb von 55°C abgekühlt. Dabei kondensiert der in dem Gemisch M enthaltene Wasserdampf, wodurch das Synthesegas S erzeugt wird und sich in einem oberen Bereich 28 des Kondensationswärmetauschers 27 ansammelt. Neben dem Wasserbestandteil des Gemisches M werden auf diese Weise auch feste Partikel sowie unerwünschte wasserlösliche Stoffe, wie z.B. Chlor, Schwefel oder Quecksilber über das Kondensat 29 abgeschieden. Das Kondensat 29 wird in einem Behälter 9 aufgefangen. Ein Wärmespeicher 34 dient der Temperaturregelung des Kondensationswärmespeichers 27.

Ein Absaugmodul 30 umfasst einen Gasfilter 31, einen Sauger in Gestalt eines Seitenkanalverdichters 23 sowie ein Absperrventil 33, mittels dessen das gewonnene Synthesegas S aus der Vergasungsanlage V bedarfsweise entnommen werden kann.

Figur 2 zeigt eine Detailansicht der Entgasungsvorrichtung 4 in der Vorderansicht a) und der Seitenansicht b).

Wie anhand von Ansicht a) der Figur 2 erkennbar ist, weist der Entgasungskanal 6 einen im Wesentlichen kreisrunden Querschnitt auf und ist in seinem Bodenbereich mit Heizelementen versehen, von denen in Ansicht a) der Figur 2 nur ein Heizelement 5 zu sehen ist. Die Heizelemente 5 sind derart angeordnet, dass sie den Entgasungskanal 6 in dem Bodenbereich um etwa 180° radial umlaufend umschließen. Wie anhand von Ansicht a) der Figur 2 ebenfalls erkennbar ist, sind die Schürelemente 8, welche jeweils ein Halteelement 8a und ein Plattenelement 8b umfassen, parallel zu der Wellenachse der Welle 7 hintereinander in drei Reihen und dabei paarweise um 120° winkelversetzt zueinander angeordnet. Wie in Ansicht b) der Figur 2 gezeigt ist, sind die Schürelemente 8 darüber hinaus entlang der Wellenachse paarweise um einen Abstand d zueinander versetzt. Hierdurch ergibt sich eine wendelförmige Anordnung der Schürelemente auf der Welle 7. Wie anhand von Ansicht b) der Figur 2 ebenfalls erkennbar ist, sind die Plattenelemente 8b gegenüber einer Ebene, die sich orthogonal zu der Wellenachse erstreckt und um die stabförmigen Halteelemente 8a geneigt. Der Neigungswinkel beträgt 55°.

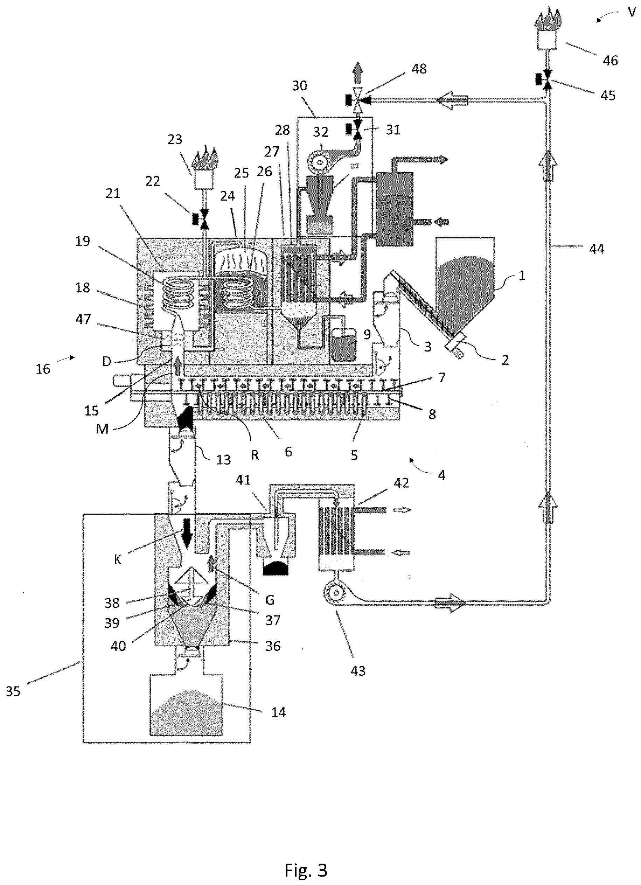

Figur 3 zeigt eine zweite Ausführungskonfiguration einer Vergasungsanlage V, welche entsprechend den Ausführungen bezüglich Figur 1 zur Erzeugung eines wasserstoffhaltigen Synthesegases S und eines kohlenstoffhaltigen Materials dient. Hierfür weist die Vergasungsvorrichtung V zum Teil die gleichen Komponenten auf, die auch in Bezug auf Figur 1 bereits erläutert sind. Sofern nicht anderweitig ausgeführt, werden für diejenigen technischen Komponenten die sowohl in Figur 1 als auch in Figur 3 gezeigt sind, die gleichen Bezugszeichen verwendet.

In Unterschied zu der in Figur 1 gezeigten Vergasungsanlage V wird gemäß Figur 2 das in der Entgasungsvorrichtung 4 gewonnene kohlenstoffhaltige Material K über die zweite Schleusenvorrichtung 13 einem Oxidationsmodul 35 zugeführt, mittels dessen das kohlenstoffhaltige Material K weiter vergast wird. Im Unterschied zu der in Figur 1 gezeigten Vergasungsanlage V wird das kohlenstoffhaltige Material hierbei nicht mit Wasserdampf durchsetzt. Stattdessen gelangt das kohlenstoffhaltige Material K in eine Vergasungskammer 36, in der das kohlenstoffhaltige Material K in einem Glutbett 37 oxidiert. Über einen Luftkanal 38 wird Luftsauerstoff als Oxidationsmittel einem Luftverteiler 39 mit einer Mehrzahl an Luftdüsen 40 zugeführt, der für die Oxidation des kohlenstoffhaltigen Materials K benötigt wird. Über ein Türelement wird das oxidierte kohlenstoffhaltige Material K in Form von Asche in den Sammelbehälter 14 geleitet.

Bei der in dem Oxidationsmodul 35 ablaufenden Reaktion wird ein Kohlenstoffmonoxid enthaltendes Schwachgas G gebildet, welches durch einen Gasfilter 41 in einen Gaswärmetauscher 42 geleitet wird. Mittels einer Absaugvorrichtung 43, bei der es sich um einen Seitenkanalverdichter handelt, wird das Schwachgas G über die Leitung 44 und einem Mischventil 48 dem Synthesegas S beigemischt.

Im Falle einer überschüssigen Erzeugung von Schwachgas G kann dieses über ein zweites Ablassventil 45 einem zweiten Brenner 46 zugeführt und abgefackelt werden.

Durch die Beimischung des kohlenstoffmonoxidhaltigen Schwachgases G kann die Zusammensetzung des Synthesegases beeinflusst werden, damit dessen Verwendung bei der Energieerzeugung beispielsweise mit geringeren Stickoxidemissionen einhergeht. Bei dem Einsatz in sog. Blockheizkraftwerken kann zudem die Klopffestigkeit durch den Kohlenstoffmonoxidgehalt im Synthesegas positiv beeinflusst werden.

Darüber hinaus unterscheidet sich die in Figur 3 gezeigte Vergasungsanlage V dadurch von der Vergasungsanlage gemäß Figur 1, dass der Reaktor 16 lediglich eine Wärmetauscherspirale 19 aufweist, in welcher ein Gemisch aus Synthesegas und Wasserdampf D geführt ist.

Der Wasserdampf D wird entsprechend den Ausführungen bezüglich Figur 1 in einem Dampfkessel 24 erzeugt, und in einer Mischkammer 47 mit dem Synthesegas vermengt, bevor dieses in die Wärmetauscherspirale 19 geführt wird.

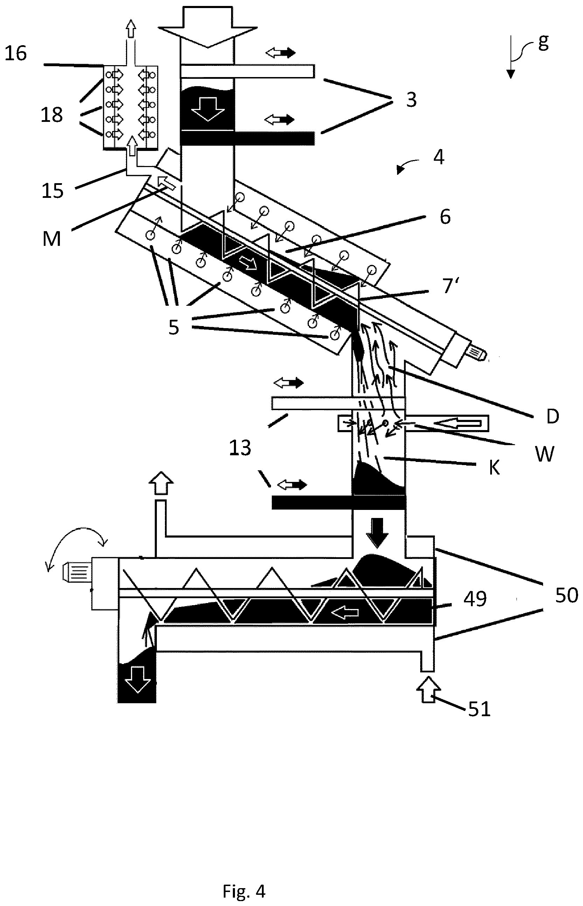

Figur 4 zeigt einen Bestandteil einer Vergasungsanlage, welcher für eine dritte Anlagenkonfiguration geeignet ist und insbesondere auch mit den oben beschriebenen Komponenten einer Vergasungsanlage gemäß Figur 1 und 3 zum Einsatz kommen kann.

Der in Figur 4 gezeigte Bestandteil einer Vergasungsanlage weist eine erste Schleusenvorrichtung 3 auf, die entspechend der Ausführungen zu den Figuren 1 und 3 angeordnet und dabei insbesondere mit einem Bunker 1 sowie einem daran angeschlossenen Schneckenförderer 2 verbunden sein kann.

Über die erste Schleusenvorrichtung 3 wird das organische Rohmaterial in eine Entgasungsvorrichtung 4 gefördert, welche einen Entgasungskanal 6 aufweist. Dieser weist einen im Wesentlichen geraden Verlauf entlang einer Erstreckungsachse auf, die gegenüber einer horizontalen Bezugsebene um etwa 30 Winkelgrade geneigt ist. Es ist alternativ grundsätzlich möglich, den Entgasungskanal um 20 bis 80 Winkelgrade gegenüber einer horizontalen Bezugsebene und damit gegenüber der Wirkrichtung der Schwerkraft um 10 bis 70 Winkelgrade zu neigen.

Innerhalb des Entgasungskanals 6 ist eine Förderschnecke 7' angeordnet. Diese umfass eine Schneckenwelle, welche mit einem Schneckenflügel, also einem spiralförmig verlaufenden Blech, versehen ist. Die Förderschnecke ist mittels eines Motors in eine Rotationsbewegung versetzbar und ermöglicht dadurch eine Förderbewegung des eingegebenen organischen Rohmaterials.

Da die Schwerkraft g aufgrund der Neigung des Entgasungskanals 6 zu einem Abtrieb des darin befindlichen organischen Rohmaterials führt, wird die erforderliche Antriebsleistung des Motors für eine Rotationsbewegung der Förderschnecke 7` verringert. Gleichzeitig dient der Schneckenflügel dazu, das organische Rohmaterial bedarfsweise zurückzuhalten und nur bei einer Rotationsbewegung der Förderschnecke 7' mit der gewünschten Fördergeschwindigkeit in dem Entgasungskanal 6 zu bewegen.

Wie in Verbindung mit den Figuren 1 bis 3 bereits erläutert, ist der Entgasungskanal 6 mit Heizelementen 5 versehen, welche dazu dienen, den organischen Rohstoff zu erhitzen und in kohlenstoffhaltiges Material K und Rohgas R aufzutrennen. Es gelten hierbei die Ausführungen in Verbindung mit den Figuren 1 bis 3 entsprechend. Insbesondere ist mittels der Entgasungsvorrichtung 4 eine allotherme Verfahrensführung möglich.

Infolge der Neigung des Entgasungskanals 6 weist dieser eine obere und eine untere Öffnung auf. Das erzeugte kohlenstoffhaltige Material K tritt infolge der Förderwirkung der Förderschnecke 7' und jenem Anteil der Schwerkraft g, welcher entlang der Erstreckungsachse des Entgasungskanals gerichtet ist, an der unteren Öffnung aus dem Entgasungskanal 6. Das erzeugte Rohgas R tritt an dem oberseitigen Ende aus dem Entgasungskanal 6 und liegt dabei in dem Gemisch M vor, wie nachfolgend im Detail erläutert ist.

Beim Austreten des kohlenstoffhaltigen Materials K weist dieses in dem hier gezeigten Beispiel eine Temperatur oberhalb von 800°C auf. Um ein Entzünden des kohlenstoffhaltigen Materials zu vermeiden, sobald dieses mit Sauerstoff in Kontakt tritt, wird dieses mit einem Wassernebel W durchsetzt und dadurch auf unter 100°C abgekühlt. Gleichzeitig entsteht hierbei Wasserdampf D, welcher an der unteren Öffnung des Entgasungskanals 6 in den Entgasungskanal 6 tritt und sich dort mit dem Rohgas R zu dem Gemisch M vermengt. Infolge thermischer Effekte wird das Gemisch M sowie die darin enthaltenen Bestandteile in Gestalt des Rohgases R und des Dampfes D zu der oberen Öffnung des Entgasungskanals 6 geleitet, durch die sie aus dem Entgasungskanal 6 treten.

Das Gemisch M gelangt entsprechend den Erläuterungen zu den Figuren 1-3 durch eine Gasleitung 15 in das Reakormodul 16, welches mehrere Heizelemete 18 aufweist und mttels dessen die Durchführung einer Wassergas-Shiftreaktion oder Wassergas-Konvertierungsreaktion möglich ist. Es ist insbesondere möglich, die weitere Behandlung des erzeugten Gemisches M mit den gleichen Komponenten durchzuführen, die in den Figuren 1 und 3 gezeigt und oben beschrieben sind.

Wie anhand von Figur 4 erkennbar ist, wird das kohlenstoffhaltige Material K mit dem Wassernebel durchsetzt, indem dieser mittels einer Düse in einen Schachtabschnitt eingeblasen wird, in welchen die untere Öffnung des Entgasungskanals 6 mündet. Die Düse befindet sich hierbei zwischen zwei Schließelementen einer zweiten Schleusenvorrichtung 13. Alternativ kann sich die Düse auch vor oder hinter der Schleusenvorrichtung 13 befinden, sowie in der anschließenden, mit einem Wärmetauschermantel 50 umschlossenen Kühlkammer 49.

Das mittels des Wassernebels W abgekühlte kohlenstoffhaltige Material K wird in einen Kühlkanal 49 geleitet, der einen Bestandteil eines Wärmetauschers darstellt und von einem Kühlmantel 50 umgeben ist. Ein Fördermittel, welches sich in Gestalt einer zweiten Förderschnecke entlang des Kühlkanals 49 erstreckt, dient dazu, das kohlenstoffhaltige Material durch den Kühlkanal 49 zu fördern. Ein in dem Kühlmantel 50 strömendes Temperiermedium nimmt Wärme von dem kohlenstoffhaltigen Material K auf, bevor dieses in einen Sammelbehälter geleitet wird. Der Sammelbehälter kann entsprechend den obigen Ausführungen zu den Figuren 1-3 ausgebildet sein.

## Patentansprüche

1. Verfahren zur Erzeugung von wasserstoffhaltigem Synthesegas (S), umfassend die folgenden Verfahrensschritte:
a) Bereitstellen eines organischen Rohstoffes;
b) Fördern des organischen Rohstoffes durch eine Entgasungsvorrichtung (4) unter Zuführung von Wärme, wodurch der organische Rohstoff zumindest in ein kohlenstoffhaltiges Material (K) und ein Rohgas (R) aufgetrennt wird, wobei das Rohgas (R) zumindest Kohlenstoffmonoxid und Wasserstoff umfasst;
c) Getrenntes Abführen des kohlenstoffhaltigen Materials (K) und des Rohgases (R) aus der Entgasungsvorrichtung (4);
d) Vermischung des Rohgases (R) mit Wasserdampf (D) zu einem Gemisch (M) und Durchführung einer Wassergas-Shiftreaktion, bei der ein in dem Gemisch (M) enthaltener Anteil an Kohlenstoffmonoxid verringert und ein Anteil an Wasserstoff erhöht wird;
e) Abkühlen des Gemischs (M), wobei der in dem Gemisch enthaltene Wasserdampf (D) zumindest teilweise kondensiert und das wasserstoffhaltige Synthesegas (S) gebildet, insbesondere abgeschieden, wird.

2. Verfahren nach Anspruch 1, bei dem
das Fördern des organischen Rohstoffes in Verfahrensschritt b) durch eine Rotationsbewegung einer Welle (7) erfolgt, die zumindest teilweise in einem Entgasungskanal (6) der Entgasungsvorrichtung (4) angeordnet ist und die außenumfangsseitig mit einer Mehrzahl an wendelförmig angeordneten Schürelementen (8) besetzt ist, mittels derer der organische Rohstoff gleichzeitig umgewälzt und entlang der Erstreckungsachse des Entgasungskanals (4) gefördert wird und/oder wobei das Fördern in Verfahrensschritt b) durch eine Rotationsbewegung einer Förderschnecke (7`) erfolgt, die zumindest teilweise in einem Entgasungskanal (6) der Entgasungsvorrichtung (4) angeordnet ist.

3. Verfahren nach Anspruch 1 oder 2, bei dem
Verfahrensschritt b) allotherm erfolgt, insbesondere bei einer Temperatur zwischen 800°C und 1200°C.

4. Verfahren nach einem der Ansprüche 1 bis 3, bei dem
die Zuführung von Wärme in Verfahrensschritt b) zumindest teilweise mittels Strahlung erfolgt, insbesondere mittels einer oder mehrerer elektrisch betriebener Heizelemente (5), die den Entgasungskanal (6) umfangsseitig zumindest teilweise umschließenund/oder
zumindest teilweise mittels Konvektion, insbesondere mittels eines Konvektionskanals, der sich in Bezug auf eine Erstreckungsachse des Entgasungskanals (6) parallel zu dem Entgasungskanal (6) erstreckt und mit einem temperierten Medium durchströmt ist.

5. Verfahren nach einem der voranstehenden Ansprüche, bei dem
das in Verfahrensschritt c) aus dem Entgasungskanal (6) abgeführte kohlenstoffhaltige Material (K) in einem Verfahrensschritt c1) mit dem Wasserdampf (D) durchsetzt wird und dadurch zumindest eine in dem kohlenstoffhaltigen Material (K) enthaltene langkettige Kohlenwasserstoffverbindung herausgelöst wird,
und das kohlenstoffhaltige Material (K) zu Aktivkohle umgewandelt wird,
und wobei der Wasserdampf (D) zum Durchsetzen des kohlenstoffhaltigen Materials (K) in Verfahrensschritt c1) bevorzugt eine Temperatur von bis zu 1000°C, bevorzugt bis zu 1500°C aufweist,
und der in Verfahrensschritt c1) verwendete Wasserdampf (D) in Verfahrensschritt d) mit dem Rohgas (R) vermengt wird.

6. Verfahren nach einem der voranstehenden Ansprüche, bei dem
das Abkühlen des Gemisches (M) in Verfahrensschritt e) zumindest teilweise mittels eines Dampfkessels (24) erfolgt,
wobei der Dampfkessel (24) mit Wasser (26) befüllt ist, welches infolge eines Wärmeübergangs von dem Gemisch (M) zumindest teilweise in den Wasserdampf (D) gewandelt wird, welcher bevorzugt zumindest in Verfahrensschritt d) mit dem Rohgas (R) vermengt wird.

7. Verfahren nach den Ansprüchen 5 und 6,
wobei der in Verfahrensschritt e) erzeugte Wasserdampf (D) in Verfahrensschritt c1) zum Durchsetzen des kohlenstoffhaltigen Materials (K) verwendet wird.

8. Verfahren nach einem der Ansprüche 5 bis 7, bei dem
in Verfahrensschritt e) das Gemisch (M) zumindest teilweise mittels eines Wärmetauschers auf eine Temperatur zwischen 600°C bis zu 1500°C temperiert wird und dadurch zumindest eine in dem Gemisch (M) enthaltene langkettige Kohlenwasserstoffverbindung gecrackt wird.

9. Verfahren nach den Ansprüchen 6 und 8, bei dem
der Wasserdampf (D) zur Durchführung des Verfahrensschrittes e) aus dem Dampfkessel (24) in den Wärmetauscher geleitet wird und
zur Durchführung des Verfahrensschrittes d) aus dem Wärmetauscher entnommen und mit dem Rohgas (R) vermengt wird
und vorzugsweise in Verfahrensschritt c1) zum Durchsetzen des kohlenstoffhaltigen Materials (K) verwendet wird.

10. Verfahren zumindest nach einem der Ansprüche 1 bis 8, bei dem
in Verfahrensschritt d) das Gemisch (M) zumindest teilweise mittels eines Wärmetauschers auf eine Temperatur von 100°C bis 150°C temperiert wird,
und das Synthesegas (S) Teer und/oder ein Pyrolyseöl, insbesondere im gasförmigen Zustand, enthält.

11. Verfahren nach einem der voranstehenden Ansprüche, bei dem
das in Verfahrensschritt c) abgeführte kohlenstoffhaltige Material (K) in einem Verfahrensschritt f) in eine Vergasungskammer (36) gegeben wird und unter Zuführung von Luftsauerstoff als Oxidationsmittel ein Kohlenstoffmonoxid enthaltendes Schwachgas (G) gebildet wird, welches dem Synthesegas (S) beigemischt wird.

12. Verfahren zumindest nach Anspruch 2, bei dem
der Entgasungskanal (6) in Bezug auf seine Erstreckungsachse derart geneigt ist, dass der organische Rohstoff zumindest teilweise mittels Schwerkraftwirkung entlang der Erstreckungsachse gefördert wird, wobei der organische Rohstoff zumindest in das kohlenstoffhaltiges Materia (K) und das Rohgas (R) aufgetrennt wird und
in Verfahrensschritt c) das kohlenstoffhaltige Material (K) an einer unteren Öffnung des Entgasungsvorrichtung abgeführt wird und das Rohgas (R) an einer oberen Öffnung des Entgasungskanals abgeführt wird,
wobei vorzugweise die Vermischung des Rohgases mit Wasserdampf zu dem Gemisch gemäß Verfahrensschritt d) vor dem getrennten Abführen des kohlenstoffhaltigen Material und dem Rohgas (R) gemäß Verfahrensschritt c) erfolgt,
bevorzugt indem das in Verfahrensschritt c) aus dem Entgasungskanal (6) abgeführte kohlenstoffhaltige Material (K) in einem Verfahrensschritt c2) mit Wasser, insbesondere Wassernebel, durchsetzt wird wobei Wasserdampf (D) entsteht, welcher in Verfahrensschritt d) mit dem Rohgas (R) vermengt wird, indem der Wasserdampf (D) an der unteren Öffnung in den Entgasungskanal (6) geführt wird, um in dem Entgasungskanal (6) das Gemisch (M) zu bilden, sodass das Rohgas (R) beim getrennten Abführen in Verfahrensschritt c) in dem Gemisch (M) vorliegt.

13. Entgasungsvorrichtung (4), insbesondere für ein Verfahren nach einem der Ansprüche 1 bis 12,
mit einem Entgasungskanal (6), welcher sich entlang einer Erstreckungsachse erstreckt und einen Hohlraum ausbildet, welcher dazu vorgesehen ist, einen organischen Rohstoff aufzunehmen,
ferner mit zumindest einem Heizelement (5), welches wärmeleitend mit einer Kanalwandung des Entgasungskanals (6) verbunden ist und dazu vorgesehen ist, den in dem Entgasungskanal aufgenommenen organischen Rohstoff zu erhitzen und in ein Rohgas (R) und ein kohlenstoffhaltiges Material (K) aufzutrennen,
ferner mit einer Welle (7), welche drehbar gelagert und zumindest teilweise in dem Entgasungskanal angeordnet ist und an einer Außenumfangsseite mit einer Mehrzahl an wendelförmig angeordneten Schürelementen (8) besetzt ist, wobei die Schürelemente (8) dazu vorgesehen sind, um bei einer Rotationsbewegung der Welle (7) den in dem Entgasungskanal (6) aufgenommenen und erhitzten organischen Rohstoff umzuwälzen und gleichzeitig entlang der Erstreckungsachse zu fördern.
und/oder mit einer Förderschnecke, die drehbar gelagert und zumindest teilweise in einem Entgasungskanal (6) der Entgasungsvorrichtung (4) angeordnet ist.

14. Vergasungsanlage (V) zur Erzeugung eines wasserstoffhaltigen Synthesegases,
mit einer Entgasungsvorrichtung (4) nach Anspruch 13, welche über einen Gaskanal (15) mit einem Reaktormodul (16) fluidleitend verbunden ist, um das in der Entgasungsvorrichtung (4) erzeugbare Rohgas (R) aus dem Entgasungskanal (6) in das Reaktormodul (16) zu leiten,
wobei der Gaskanal (15) zumindest eine Einblasöffnung (10) für Wasserdampf (D) aufweist, um bei Einblasen von Wasserdampf (D) ein Gemisch (M) aus Rohgas (R) und Wasserdampf (D) für die Durchführung einer Wassergas-Shiftreaktion zu erzeugen,
und wobei das Reaktormodul (16) einen ersten Wärmetauscher aufweist, welcher dazu vorgesehen ist, das Gemisch (M) aus Rohgas (R) und Wasserdampf (D) zu temperieren,
sowie mit einem Kühlmodul mit zumindest einem zweiten Wärmetauscher, insbesondere einem Kondensationswärmetauscher (27), welcher dazu vorgesehen ist, das Gemisch (M) aus Rohgas (R) und Wasserdampf (D) abzukühlen und insbesondere mittels Kondensation von Wasserdampf (D) das Synthesegas (S) zu erzeugen, insbesondere abzuscheiden.

15. Vergasungsanlage (V) zur Erzeugung eines wasserstoffhaltigen Synthesegases,
mit einer Entgasungsvorrichtung (4) nach Anspruch 13, deren Entgasungskanal mit seiner Erstreckungsachse geneigt ist und eine obere und eine untere Öffnung aufweist,
wobei die untere Öffnung dazu vorgesehen ist, um das in der Entgasungsvorrichtung erzeugbare kohlenstoffhaltige Material (K) auszugeben und gleichzeitig Wasserdampf (D) aufzunehmen,
und wobei die obere Öffnung über einen Gaskanal (15) mit einem Reaktormodul (16) fluidleitend verbunden ist, um das in der Entgasungsvorrichtung (4) erzeugbare Rohgas (R) und den Wasserdampf (D) in Gestalt eines Gemischs (M) aus dem Entgasungskanal (6) in das Reaktormodul (16) zu leiten,
wobei das Reaktormodul (16) einen ersten Wärmetauscher aufweist, welcher dazu vorgesehen ist, das Gemisch (M) aus Rohgas (R) und Wasserdampf (D) zu temperieren, insbesondere für eine Wassergas-Shiftreaktion,
sowie mit einem Kühlmodul mit zumindest einem zweiten Wärmetauscher, insbesondere einem Kondensationswärmetauscher (27), welcher dazu vorgesehen ist, das Gemisch (M) aus Rohgas (R) und Wasserdampf (D) abzukühlen und insbesondere unter Kondensation von Wasserdampf (D) das Synthesegas (S) zu erzeugen, insbesondere abzuscheiden.
